# EUROPÄISCHE PATENTANMELDUNG

(11) **EP 1 942 319 A1**
(43) Veröffentlichungstag der Anmeldung: **09.07.2008**
(21) Anmeldenummer: 07123800.0
(22) Anmeldetag: 20.12.2007
(51) Int. Cl.: G01F 11/18, A61C 13/00

(54) **Vorrichtung zur dosierten Abgabe eines pulverförmigen Mediums**

(30) Priorität: 27.12.2006 DE 102006062304
(71) Anmelder: DeguDent GmbH, 63457 Hanau (DE)
(72) Erfinder: VOLLMANN, Dr., Markus, 63571, Gelnhausen (DE); LEHNHOFF, Wolfgang, 61352, Bad Homburg (DE); WIESNER, Carsten, 61169, Friedberg (DE); KREUDER, Peter, 61231, Bad Nauheim (DE)
(74) Vertreter: Stoffregen, Hans-Herbert

(57) **Zusammenfassung**

Die Erfindung bezieht sich auf eine Vorrichtung (10) zur dosierten Abgabe eines pulverförmigen Mediums, insbesondere Keramikpulvers für dentale Zwecke, umfassend einen Vorratsbehälter (12) mit einer ersten Austrittsöffnung (40) sowie einen Schieber (20) mit einer Aufnahme (18) für eine zu dosierende Menge des Mediums, der wahlweise auf die erste Austrittsöffnung oder eine zweite Austrittsöffnung (50) ausrichtbar ist, über die das Medium abgebbar ist. Damit bei einfacher Konstruktion eine definierte Menge des fließfähigen Mediums reproduzierbar abgebbar ist und eine Wiederverwendbarkeit nach Entleeren des Vorratsbehälters nicht erforderlich ist wird vorgeschlagen, dass der Schieber (20) mit zumindest einem Federelement (26, 28) verbunden ist, über das der Schieber zum Ausrichten der Aufnahme (80) auf die erste Aufnahme (40) kraftbeaufschlagt ist, und dass die Aufnahme in einer auf die zweite Austrittsöffnung (50) ausgerichteten Stellung mittels einer Sicherung (34) fixierbar ist.

## Beschreibung

Die Erfindung bezieht sich auf eine Vorrichtung zur dosierten Abgabe eines pulverförmigen Mediums, insbesondere Keramikpulver für dentale Zwecke, umfassend ein einen Vorratsbehälter für das Medium zur Verfügung stellendes Gehäuse mit einer ersten Austrittöffnung, eine von dem Gehäuse ausgehende bzw. mit diesem verbundene Abdeckung mit einer das Medium abgebenden zweiten Austrittsöffnung sowie einen innerhalb der Abdeckung verschiebbaren wahlweise auf die erste oder die zweite Austrittsöffnung ausrichtbaren Schieber mit einer Aufnahme für zu dosierende Menge des Mediums, wobei der Schieber mit zumindest einem Federelement wechselwirkt, über das der Schieber zum Ausrichten der Aufnahme auf die erste Austrittsöffnung fortwährend kraftbeaufschlagt ist.

Entsprechende Dosiervorrichtungen werden in verschiedenen Industriezweigen eingesetzt, um eine vorbestimmte Menge eines Mediums z. B. einem weiteren Verarbeitungsprozess zuführen zu können.

Aus der DE-C-33 36 274 ist ein auf eine Konservendose oder auf ein Glasgefäß aufschraubbarer Behälterdeckel bekannt, um dosiert Verbrauchsgüter wie Kaffeegranulat oder Tee abgeben zu können. Der Deckel umfasst einen Schieber, der Aufnahme zum dosierten Abgeben des Verbrauchsguts aufweist. Der Schieber wird über von diesem ausgehende Arme schwenkbar an von dem Deckel ausgehende Stifte angelenkt. Die die Wirkung von Federelementen aufweisenden Arme bewirken, dass der Schieber wahlweise in einer ersten oder in einer zweiten Stellung positioniert ist, sofern keine Kräfte von außen einwirken.

Ein Dosierer für z. B. Zucker ist aus der DE-A-34 22 486 bekannt. Eine dosierte Menge kann von einer Aufnahme eines Schiebers aufgenommen werden, der mittels einer Feder derart kraftbeaufschlagt wird, dass die Aufnahme auf eine Austrittsöffnung ausgerichtet ist, die in den den Zucker aufnehmenden Vorratsbehälter des Dosierers übergeht.

Bei einer Vorrichtung zur portionierten Ausgabe von z. B. Kaffee oder Tee weist ein Deckel einen Schieber auf, der mit einer das zu dosierende Medium aufnehmenden Dosierkammer mittels angeformter Federblätter stets auf eine Öffnung ausgerichtet ist, die in den Vorratsbehälter für das Medium übergeht (DE-A-100 23 971).

Eine Dose für pulverförmiges Gut wie Schnupftabak wird in dem DE-U-79 02 889 beschrieben. Dabei wird mittels eines eine Dosierkammer aufweisenden Schiebers Schnupftabak einem Vorratsbehälter entnommen. Der Schieber kann dabei mit einer Feder zusammenwirken, damit die Dosierkammer in Richtung der Öffnung der Dose kraftbeaufschlagt ist.

Gegenstand der DE-C-137 635 ist ein Behälter mit selbsttätiger Abgabe eines pulverförmigen oder körnigen Mediums. Hierzu ist ein Schieber mit einer Feder verbunden, um den Schieber mit einer Dosierkammer in Richtung einer Öffnung eines Vorratsbehälters zu bewegen, dem das Medium zu entnehmen ist.

Die EP-A-0 079 239 bezieht sich auf eine Dosiervorrichtung, auf die ein Behälter aufschraubbar ist. Die Dosiervorrichtung umfasst einen Schieber, der mittels Federelementen in einer Stellung gehalten wird, in der eine Dosierkammer des Schiebers auf eine zu dem Behälter führende Öffnung ausgerichtet ist.

In der DE-A-40 38 274 wird ein mechanisierter oder automatisierter Dosierspender beschrieben, der nach einer Ausführungsform einen Trichter als Vorratsbehälter umfasst, dessen Austrittsöffnung mit einem Zylinder verbunden ist, in dem ein einen ringförmigen Raum begrenzender Kolben mittels einer Zahnstange verschiebbar ist. Dabei kann der von dem Kolben begrenzte Raum wahlweise auf die von dem Trichter ausgehende Austrittsöffnung oder mit einer weiteren Austrittsöffnung verbunden sein, um die in dem Raum eingefüllte Menge abgeben zu können.

Bei einer Dosiervorrichtung nach der DE-B-22 28 548 ist einem Vorratsbehälter eine Dosierwelle zugeordnet, die eine Dosierkammer umfasst, die wahlweise auf den Vorratsbehälter bzw. nach Drehen der Dosierwelle auf eine Abgabeöffnung ausrichtbar ist.

Eine andere Möglichkeit, um eine dosierte Menge eines pulverförmigen Materials abzugeben, bietet die DE-A-197 27 340. Dabei wird das Material in einer Kartusche verpresst, um sodann bei drehender Kartusche mittels eines feststehenden Messers Material abzurakeln.

Der vorliegenden Erfindung liegt die Aufgabe zu Grunde, eine Vorrichtung der eingangs genannten Art so weiterzubilden, dass bei einfacher Konstruktion eine definierte Menge des fließfähigen Mediums reproduzierbar abgebbar ist. Dabei ist sicherzustellen, dass in der eine Dosierkammer bildenden Aufnahme abzugebendes Material sich nicht ansammeln und damit anhaften kann, um auszuschließen, dass nach mehrfachem Gebrauch die abzugebende Menge unerwünscht verringert wird. Auch sollen Brückenbildungen von Material in dem Gehäuse selbst unterbunden werden. Ferner soll die Möglichkeit geschaffen sein, dass das Gehäuse vollständig entleert werden kann. Gleichzeitig soll die Vorrichtung kostengünstig herstellbar sein, so dass eine Wiederverwendbarkeit nach Entleeren des Vorratsbehälters nicht zwingend erforderlich ist.

Zur Lösung der Aufgabe sieht die Erfindung zum einen im Wesentlichen vor, dass der Schieber in einer auf die zweite Austrittsöffnung ausgerichteten Stellung mittels einer Sicherung fixierbar ist.

Erfindungsgemäß wird der Schieber bei Nichtbenutzung der Vorrichtung in der Position arretiert, in der eine Verbindung zu dem Innenraum des Vorratsbehälters gesperrt ist, so dass sich infolgedessen keine Reste des zu dosierenden pulverförmigen Mediums einlagern können, die ggfs. bei weiterer Benutzung haften bleiben, so dass die abzugebende Menge unerwünscht verringert werden würde.

Zum Abgeben des Mediums wird die Sicherung entfernt und die Vorrichtung zum Befüllen der Aufnahme, also der in dem Schieber vorhandenen Dosierkammer von Hand gedreht, um das pulverförmige Medium der Aufnahme zuzuführen. Sodann wird der Schieber auf die zweite Austrittsöffnung verstellt, so dass zum einen die Verbindung mit dem Vorratsbehälter unterbrochen ist und zum anderen die in der Aufnahme vorhandene Menge an pulverförmigem Medium abgegeben werden kann.

Nach einem eigenerfinderischen Lösungsvorschlag ist vorgesehen, dass das Gehäuse eine Schwingeinrichtung enthält oder mit dieser verbunden ist, die in Abhängigkeit von der Lage des Gehäuses aktivierbar ist. Dabei handelt es sich bei der Schwingeinrichtung insbesondere um einen Unwuchtmotor, wodurch sichergestellt ist, dass im erforderlichen Umfang über die erste Austrittsöffnung der Aufnahme abzugebendes Medium zugeführt wird, also dann, wenn die Vorrichtung derart gedreht ist, dass sich die Abdeckung unten befindet. Allein in dieser Stellung wird die Schwingeinrichtung aktiviert. Hierzu ist insbesondere vorgesehen, dass ein die Schwingeinrichtung enthaltender Stromkreis dann geschlossen wird, wenn die Vorrichtung zum Abgeben des Mediums gedreht ist, wobei zum Schließen des Stromkreises ein Schalter z. B. in Form eines Reedkontaktes vorgesehen ist, der über einen Magneten betätigt werden kann. Der Magnet kann in Längsrichtung des Gehäuses verschiebbar gelagert sein und nähert sich dann dem Reedkontakt zu dessem Umschalten, also Schließen des Stromkreises, wenn das Gehäuse in die Abgabestellung gedreht wird.

Insbesondere kann ein vorzugsweise zylindrischer Magnet in einer sich in Längsrichtung des Gehäuses erstreckenden hohlzylindrischen Aufnahme verschiebbar angeordnet sein, wobei Längenerstreckung der Aufnahme größer als Erstreckung des Magneten in Längsrichtung des Gehäuses ist. Der Magnet ist in Bezug auf den Schalter wie Reedkontakt derart angeordnet, dass sich dann, wenn die Vorrichtung nicht genutzt wird, also z. B. abgestellt ist, der Magnet unterhalb des Schalters befindet und in dieser Position einen größeren Abstand zum Schalter aufweist, als wenn das Gehäuse um 180° in die Stellung gedreht ist, in der das pulverförmige bzw. fließfähige Medium abgegeben wird.

Um den Magneten z. B. beim Transport in einer Stellung zu halten, in der ein Schalten des Reedkontaktes und damit Schließen des Stromkreises nicht möglich ist, sieht eine Weiterbildung der Erfindung vor, dass die auch als Rohr zu bezeichnende Aufnahme des Magneten von der Bodenwandung des den Reedkontakt und den Unwuchtmotor mit elektrischer Verschaltung einschließlich Batterie aufnehmenden Gehäuseteils ausgeht. In der Bodenwandung befindet sich sodann in Verlängerung der Aufnahme eine Fixierung wie eine Vertiefung, in die ein Metallteil wie Stahlplättchen in Form z. B. einer Unterlegescheibe einbringbar ist, das den Magneten in einer bodenwandseitigen Stellung hält. Infolgedessen ist der Abstand zwischen Reedkontakt und Magneten so groß, dass der Reedkontakt nicht geschaltet und der Stromkreis für den Unwuchtmotor nicht geschlossen ist. Diese Maßnahmen bieten auf einfachem Wege eine Transportsicherung. Bei Benutzung des Dosierspenders bedarf es nur eines Entfernens des Metallteils, so dass der Magnet im gewünschten Umfang innerhalb der Aufnahme, also insbesondere des aus Kunststoff bestehenden Rohres schwerkraftbedingt verschiebbar ist mit der Folge, dass dann, wenn das Kopfteil des Gehäuses, also die zweite Austrittsöffnung nach unten zeigt, der Magnet in Richtung des Reedkontakts verrutscht und diesen schaltet und der Unwuchtmotor somit in Betrieb gesetzt wird.

Insbesondere weist die Vorrichtung ein zylindrisches Gehäuse als dem Vorratsbehälter auf, der von einer kappenartigen Abdeckung wie Haube verschließbar ist in der der Schieber federkraftbeaufschlagt verstellbar geführt ist. Die Abdeckung sollte umfangswandseitig zumindest abschnittsweise fluchtend in die Außenfläche des Gehäuses übergehen. Die Abdeckung weist eine Öffnung als erste Öffnung auf, in die der Schieber entgegen einer von dem Federelement erzeugten Kraft in die Abdeckung hinein zum Ausrichten von der ersten Austrittsöffnung auf die zweite Austrittsöffnung verstellbar ist. Des Weiteren sollte die Abdeckung kopfseitig abgeflacht sein und eine senkrecht zur Längsachse des Gehäuses verlaufende Fläche aufweisen, die von der zweiten Austrittsöffnung durchsetzt ist, die vorzugsweise von einem von der Fläche abragenden hohlzylindrischen Vorsprung umgeben ist. In den hohlzylindrischen Vorsprung kann sodann ein die Sicherung bildender zylindrischer Körper eingesetzt werden, der den Schieber dann arretiert, wenn die Aufnahme auf die zweite Austrittsöffnung ausgerichtet ist. In dieser Position ist die erste Austrittsöffnung von dem Schieber verschlossen.

Um ein kontrolliertes Verstellen des Schiebers sicherzustellen, wird dieser von einer in der Abdeckung senkrecht zur Längsachse des Gehäuses verlaufenden Führung aufgenommen.

Das von der Abdeckung verschlossene Gehäuse selbst sollte abdeckseitig einen kappenwie kegel- bzw. kegelstumpfförmigen Fortsatz aufweisen, der die erste Austrittsöffnung begrenzt, wobei von dem Fortsatz selbst die Führung für den Schieber ausgeht. Dabei kann die Führung aus einem plattenförmigen schieberseitig eben verlaufenden Basiselement und einem von diesem ausgehenden gebogenen Element mit einer Innengeometrie bestehen, die der Außengeometrie des Schiebers angepasst ist.

Das Basiselement weist ein in die erste Austrittsöffnung übergehende Öffnung als zweite Öffnung auf, wobei in Längsrichtung des Basiselements versetzt zu der zweiten Öffnung das gebogene Element von einer Öffnung als dritte Öffnung durchsetzt ist, die in die zweite Austrittsöffnung übergeht.

Innerhalb der Führung ist der Schieber verstellbar, der mittels des Federelementes derart kraftbeaufschlagt wird, dass das Bestreben besteht, dass die Aufnahme auf die erste Austrittsöffnung ausgerichtet wird. Um mit einfachen Maßnahmen das Federelement zu fixieren und die erforderliche Kraft einwirken zu lassen, ist vorgesehen, dass von einem ersten Endbereich der Führung, insbesondere von dem im Schnitt eine Kreisabschnittgeometrie wie Halbkreis aufweisenden gebogenen Element, eine erste Befestigung ausgeht, die insbesondere durch von jeweiligem Längsrandbereich der Führung abragende stiftförmige Vorsprünge gebildet wird. Als Gegenbefestigung für das Federelement sollte von dem Schieber ein zu beiden Seiten der Führung sich erstreckendes stiftförmiges Element ausgehen, das entsprechende Längsschlitze in der Führung durchsetzt. Somit besteht die Möglichkeit, entlang jeden Längsrandes der Führung ein Federelement wie Zugfeder zu positionieren, über die der Schieber kraftbeaufschlagt wird.

Der Schieber sollte umfangsseitig eine Halbzylindergeometrie zeigen, deren die Bodenwandung bildende Flachseite auf dem Basiselement aufliegt und entlang diesem verschiebbar ist.

Von der Bodenwandung des Schiebers gehen vorzugsweise stegförmige und senkrecht zur Längsachse des Schiebers verlaufende die Aufnahme, d. h. die Dosierkammer begrenzende Wandungen aus. Die Bodenwandung weist entsprechend eine Öffnung als vierte Öffnung auf, die auf die erste Austrittsöffnung ausrichtbar ist. Die Begrenzungswandungen sind umfangsseitig an die Innenumfangsgeometrie des gebogenen Elementes angepasst, so dass sich eine umfangsseitig geschlossene Aufnahme bildet, in der die zu dosierende Menge in Form des pulverförmigen Mediums einbringbar ist. Die Aufnahme ist gegenüber der vierten Öffnung von dem Schieber unbedeckt und wird in Abhängigkeit von der Stellung des Schiebers von der Führung verschlossen oder über die dritte Öffnung mit der zweiten Austrittsöffnung verbunden.

Um den Schieber betätigen zu können, weist dieser in seinem der ersten Öffnung zugewandten Bereich eine vorzugsweise strukturierte Begrenzungswandung als Handhabe auf. Dabei verläuft die Begrenzungswandung zum Verschieben des Schiebers bei in Ausgriff mit der Sicherung sich befindendem Schieber außerhalb der Abdeckung.

Des Weiteren kann der Schieber mehrere von der Bodenwandung ausgehende Versteifungsrippen aufweisen, die umfangsseitig zumindest abschnittsweise der Innenumfangsgeometrie des gebogenen Elements der Führung angepasst sind.

Die Sicherung sollte erwähntermaßen eine Zylinderform aufweisen, wobei eine gestufte Geometrie bevorzugt ist, die an die Innengeometrie der Bereiche der Abdeckung bzw. der Führung angepasst sind, in die die Sicherung eingreift. Unabhängig hiervon sollte die Sicherung endseitig ein flanschartig ausgebildetes Deckelelement aufweisen, das umfangsseitig fluchtend in die Umfangsfläche des hohlzylindrischen Vorsprungs der Abdeckung übergeht, wenn die Sicherung eingebracht ist, oder ggfs. seitlich vorsteht, um ein leichtes Erfassen zum Entfernen aus dem hohlzylindrischen Vorsprung zu ermöglichen.

Die Abdeckung kann mit dem Gehäuse insbesondere durch Ultraschallverschweißung stoffschlüssig verbunden sein. Auch die Bodenwandung des Gehäuses sollte mit der Umfangswandung mittels Ultraschall verschweißt werden. Andere stoffschlüssige Verbindungsarten wie Kleben sind gleichfalls möglich.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:
- Fig. 1: eine Dosiervorrichtung in perspektivischer Darstellung,
- Fig. 2: eine Vorderansicht der Dosiervorrichtung gemäß Fig. 1,
- Fig. 3: einen Schnitt entlang der Linie A-A in Fig. 2,
- Fig. 4: einen Schnitt entlang der Linie B-B,
- Fig. 5: eine perspektivische Darstellung einer die Vorrichtung gemäß Fig. 1 abdeckenden Haube,
- Fig. 6: eine Draufsicht auf die Haube gemäß Fig. 5 in vergrößerter Darstellung,
- Fig. 7: eine Vorderansicht der Haube gemäß Fig. 5,
- Fig. 8: einen Schnitt entlang der Linie A-A in Fig. 7,
- Fig. 9: das Gehäuse der Vorrichtung gemäß Fig. 1,
- Fig. 10: eine Schnittdarstellung des Gehäuses gemäß Fig. 9,
- Fig. 11: einen Schnitt entlang der Linie A-A in Fig. 10,
- Fig. 12: eine Ansicht in Richtung B gemäß Fig. 10,
- Fig. 13: eine perspektivische Darstellung eines Schiebers der Vorrichtung gemäß Fig. 1,
- Fig. 14: eine Draufsicht auf den Schieber gemäß Fig. 13,
- Fig. 15: einen Schnitt entlang der Linie A-A in Fig. 14,
- Fig. 16: einen Schnitt entlang der Linie B-B in Fig. 14,
- Fig. 17: eine Rückansicht des Schiebers gemäß Fig. 13,
- Fig. 18: eine weitere Ausführungsform einer Dosiervorrichtung in Explosionsdarstellung,
- Fig. 19: eine erste perspektivische Darstellung eines mit der Vorrichtung gemäß Fig. 18 verbindbaren Abschnitts und
- Fig. 20: den Abschnitt gemäß Fig. 19 in einer anderen perspektivischen Darstellung.

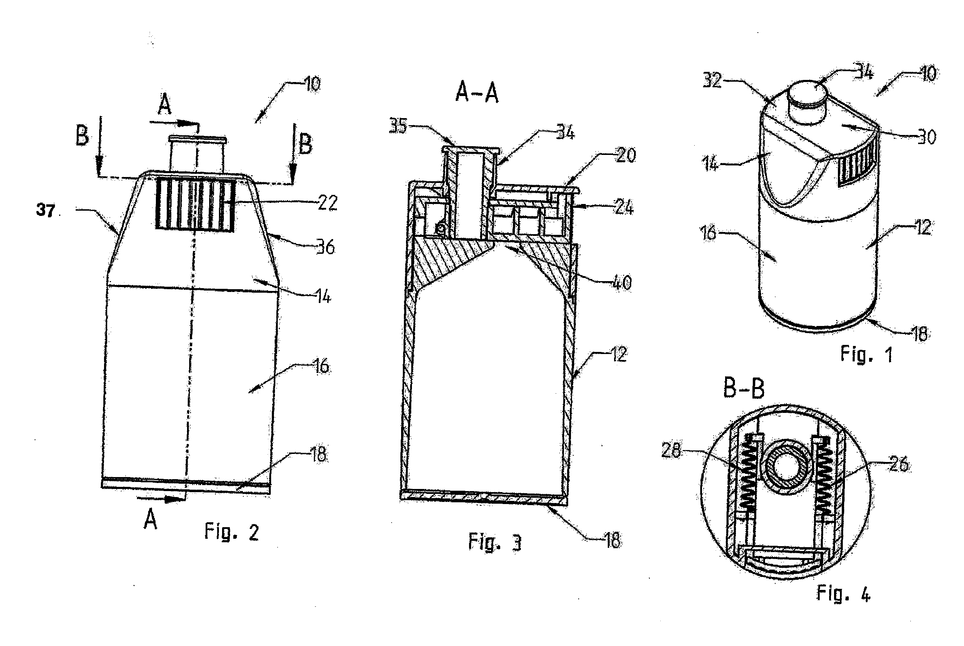

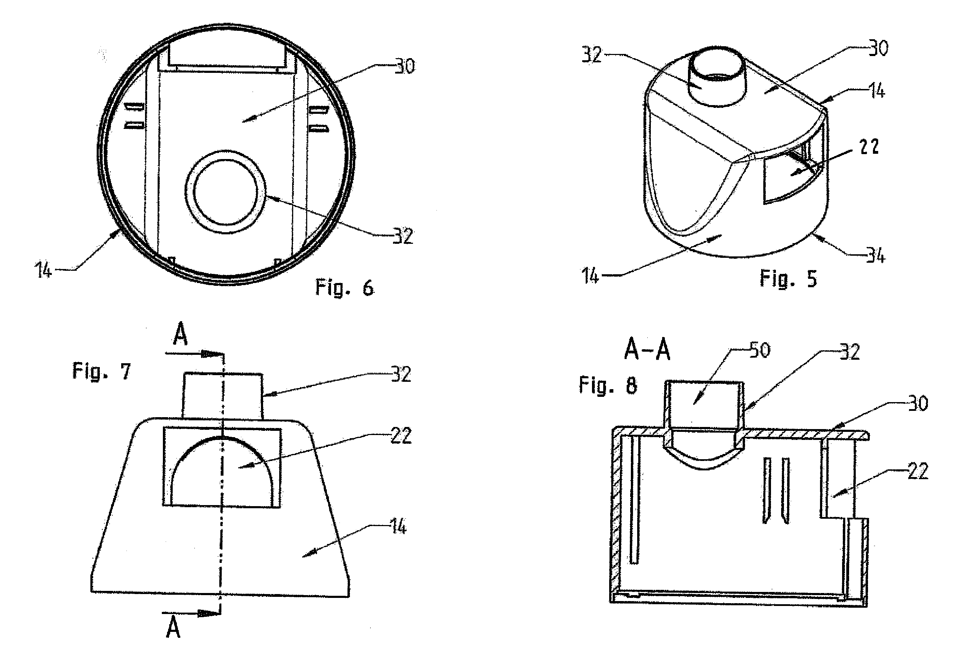

In den Fig. 1 bis 17 sind Elemente und Details einer Dosiervorrichtung 10 dargestellt, mittels der eine definierte Menge an fließfähigen Medien, insbesondere pulverförmiges Material wie Keramikpulver bestimmt für den dentalen Bereich, abgegeben werden kann. Die diesbezüglichen beispielhaft angegebenen Anwendungsfälle sind jedoch nicht schutzeinschränkend zu werten, gleichwenn diese bevorzugt sind.

Die Vorrichtung 10 umfasst ein Gehäuse 12, das von einer nachstehend als Haube 14 bezeichneten Abdeckung kopfseitig abgeschlossen wird. Dabei kann die Haube 14 mit dem Gehäuse 12 stoffschlüssig mittels Ultraschallschweißens verbunden werden. Das Gehäuse 12 weist einen eine Zylinderform aufweisenden Hauptkörper 16 auf, der bodenseitig von einer Bodenwandung 18 verschlossen ist, der gleichfalls mit dem Gehäusekörper 16 mittels Ultraschallschweißens stoffschlüssig verbunden sein kann.

In das Gehäuse 12 wird bei entfernter Bodenwandung 18 das dosiert abzugebende fließfähige Medium eingegeben. Anschließend wird das Gehäuse 12 mit der Bodenwandung 18 verschlossen. Das Gehäuse 12 bildet folglich einen Vorratsbehälter.

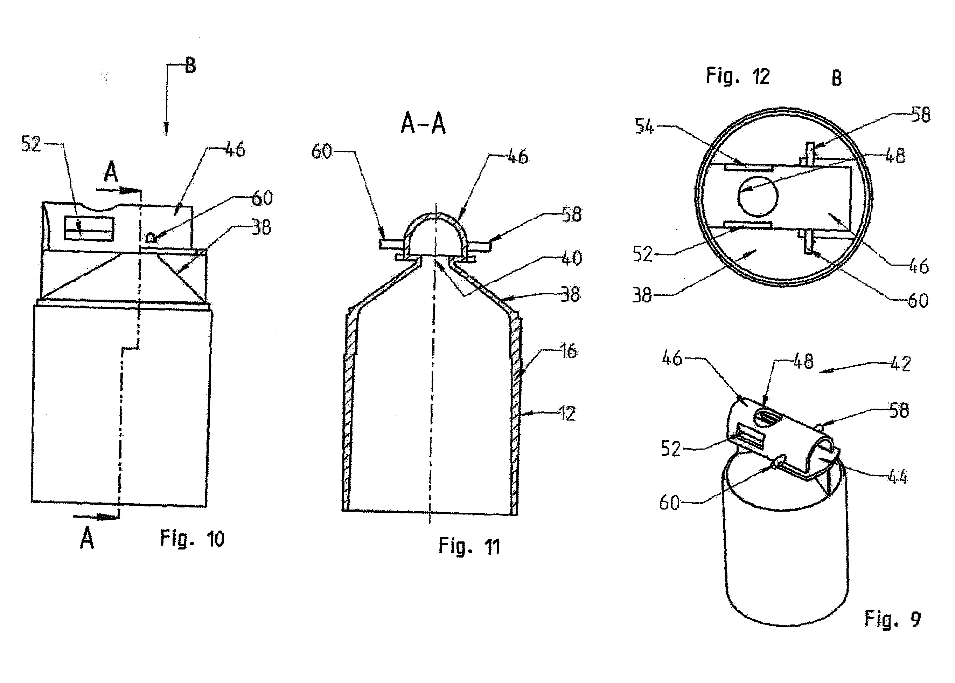

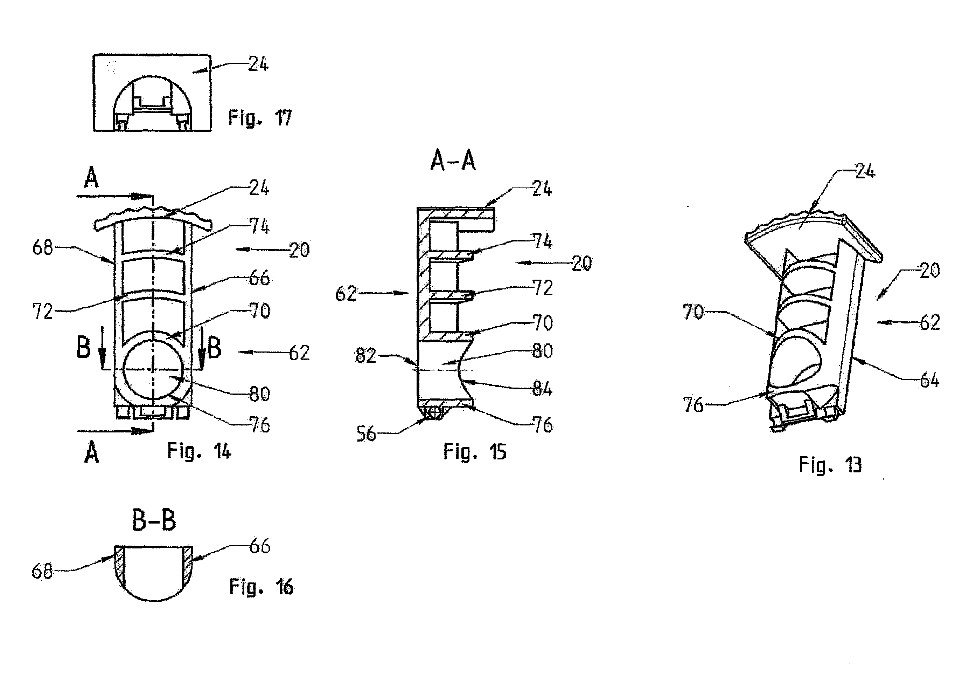

Um reproduzierbar eine dosierte Menge des Mediums abzugeben, ist eine Dosiereinrichtung in Form eines Schiebers 20 vorgesehen, der anhand der Fig. 13 bis 17 in Verbindung mit den Fig. 9 bis 12 näher erläutert wird. Der Schieber 20 ist senkrecht zur Längsachse des Gehäuses 12 in der Haube 14 verschiebbar. Hierzu weist die Haube 14 eine Durchbrechung als eine Öffnung 22 auf, von der eine Front- oder Vorderwandung 24 des Schiebers 20 erfassbar ist, um entgegen der Kraft von Zugfedern 26, 28 in die Haube 14 hineingedrückt zu werden.

Die Haube 14 weist an ihrer Oberseite einen abgeflachten Bereich 30 auf, von der ein eine Hohlzylindergeometrie aufweisender Vorsprung 32 abragt, in den eine eine Zylinderform aufweisende Sicherung 34 einsetzbar ist, um den Schieber 20 in der den Fig. 1 und 3 zu entnehmenden Stellung zu positionieren. Die Sicherung 34 kann ein flanschartig ausgebildetes Deckelelement 35 aufweisen, um ein problemloses Erfassen zu ermöglichen.

Die Haube 14 weist eine Zylindergeometrie mit zwei gegenüberliegenden schräg verlaufenden Begrenzungsflächen 36, 37 auf. Die Flächen 36, 37 erstrecken sich entlang des Schiebers 24. In den verbleibenden Flächen folgt die Haube 30 mit ihrer Umfangsfläche Zylinderumfangswandabschnitten. Die Haube 14 geht des Weiteren außenseitig fluchtend in Außenfläche des Haupt- oder Basiskörpers 16 des Gehäuses 12 über.

Das Gehäuse 12, d. h. der eine Zylinderform aufweisende Basiskörper 16, geht kopfseitig in einen innenseitig eine Trichterform aufweisenden Kopfabschnitt 38 oder Fortsatz über, der eine kegelstumpfförmige Geometrie aufweist. Der Kopfabschnitt 38 begrenzt eine erste Austrittsöffnung 40. Der Kopfabschnitt 38 kann ein getrennt hergestelltes Teil wie Spritzgussteil sein und mit dem Basiskörper 16 stoffschlüssig z. B. mittels Ultraschallschweißens verbunden sein. Von dem Kopfabschnitt 38 geht eine Führung 42 für den Schieber 20 aus. Die Führung 42 weist einen plattenförmigen Basisabschnitt 44 - auch Basiselement genannt - auf, der von einem im Schnitt eine Bogenform aufweisenden rohrabschnittförmigen Element 46 abgedeckt wird, dessen Innengeometrie der wirksamen Umfangsgeometrie des Schiebers 20 entspricht. Somit ist eine einwandfreie Führung des Schiebers 20 gegeben. Die Führung 42 erstreckt sich senkrecht zur Längsachse des Gehäuses 12.

Der Basisabschnitt 44 weist eine als zweite Öffnung zu bezeichnende Durchbrechung auf, die in die erste Austrittsöffnung 40 übergeht.

Das gebogene Element 46 weist eine Öffnung 48 als dritte Öffnung auf, die fluchtend zu dem eine zweite Austrittsöffnung 50 umgebenden Hohlzylindervorsprung 32 verläuft. Im Bereich der dritten Öffnung 48 erstrecken sich entlang des Basiselementes 44 Längsschlitze 52, 54, die von einem als Achse 56 zu bezeichnenden Stiftelement durchsetzt werden, das im rückseitigen Bereich des Schiebers 20 fixiert ist und sich quer zu dessen beiden Längsseiten erstreckt.

Vom vorderen Bereich des gebogenen Elementes 46 ragen stiftförmige Vorsprünge 58, 60 ab, und zwar in einer Richtung, die der der Achse 56 entspricht. Zwischen den seitlich abragenden Abschnitten der Achse 56 und den Vorsprüngen 58, 60 werden sodann die Zugfedern 26, 28 eingehängt, wodurch der Schieber 20 eine Kraftbeaufschlagung in Richtung des vorderen Endes der Führung 42 und somit der Öffnung 22 in der Haube 14 erfährt.

Der Schieber 20 weist einen Basiskörper 62 auf, der eine Basisplatte 64 und von diesem ausgehende stegförmige Längsseitenwandabschnitte 66, 68 umfasst. Zwischen diesen erstrecken sich Begrenzungswandungen 70, 72, 74. Vordere Begrenzungswandungen 72, 74 stellen rippenartige Verstärkungen dar. Demgegenüber begrenzt eine rückseitige Zwischenwandung 70 mit einer hinteren Begrenzungswandung 76 des Schiebers 20 eine Aufnahme 80, in die das aus dem Gehäuse 12 zu übergebende Medium fließen kann. Die Aufnahme 80 ist bodenseitig geöffnet, weist folglich eine Öffnung (vierte Öffnung) 82 auf. Diese Öffnung 82 ist auf die nicht dargestellte zweite Öffnung des plattenförmigen Basisabschnitts 44 der Führung 42 ausrichtbar, die ihrerseits fluchtend zur ersten Austrittsöffnung 40 verläuft. Die Aufnahme 80 und damit deren Öffnung 82 ist auf die erste Austrittsöffnung 40 dann ausgerichtet, wenn auf den Schieber 20 ausschließlich die von den Zugfedern 26, 28 hervorgerufenen Kräfte einwirken. In diesem Fall befindet sich der Schieber 20 mit seiner vorderen strukturierten Front- oder Begrenzungswandung 24 außerhalb der Haube 14. In dieser Position ist die Aufnahme 80 über die Öffnung 82 zugänglich, wohingegen der verbleibende Bereich von der Führung 42, d. h. dem gebogenen Element 46 abgedeckt ist. Zum Befüllen der Aufnahme 80 muss die Dosiervorrichtung 10 in dieser Stellung des Schiebers 20 um etwa 180° gedreht werden. Sodann wird der Schieber 20 entgegen der Kraft der Federn 26, 28 in die Haube 14 hineingedrückt. Dabei wird die Öffnung 82 der Aufnahme 80 geschlossen. Bei in die Haube 14 hineingedrücktem Schieber 20 - die Bewegung wird durch das Zusammenwirken der Achse 56 mit den Begrenzungen der Schlitze 52, 54 begrenzt - gelangt die Aufnahme 80 mit ihrer der bodenseitigen Öffnung gegenüberliegenden oberen Öffnung 84 in fluchtende Ausrichtung zu der dritten Öffnung 48 und damit zu der zweiten Austrittsöffnung 50, so dass das sich in der Aufnahme 80 befindende Medium abgegeben werden kann.

Sodann kann über die zweite Öffnung 50 die Sicherung 34 eingesetzt werden, die bis in den Schieber 20, d. h. die Aufnahme 80 eindringt, um den Schieber 20 zu arretieren. In dieser Stellung verläuft die Frontwandung 24 des Schiebers 20 in etwa fluchtend zur Außenfläche der Haube 14, wie sich aus den Darstellungen der Fig. 1 bis 4 prinzipiell ergibt.

Erfindungsgemäß wird mit konstruktiv einfachen Maßnahmen eine Dosiervorrichtung zum dosierten Abgeben eines fließfähigen Mediums, insbesondere Keramikpulver, zur Verfügung gestellt, die als Einmal-Dosierer verwendet werden kann. Die Konstruktion ist selbstverständlich auch für eine Mehrfachverwendung geeignet. In diesem Fall müsste die Bodenwandung 18 lösbar den Basiskörper 20 verschließen.

Die einzelnen Bauteile der Vorrichtung 10 bestehen aus Kunststoff und können Spritzgussteile sein. Die Führung 42 kann als gesondertes Teil mit dem kappenförmigen Kopfabschnitt 38 des Gehäuses 12 ultraschallverschweißt sein. Andere Befestigungsmöglichkeiten sind gleichfalls möglich.

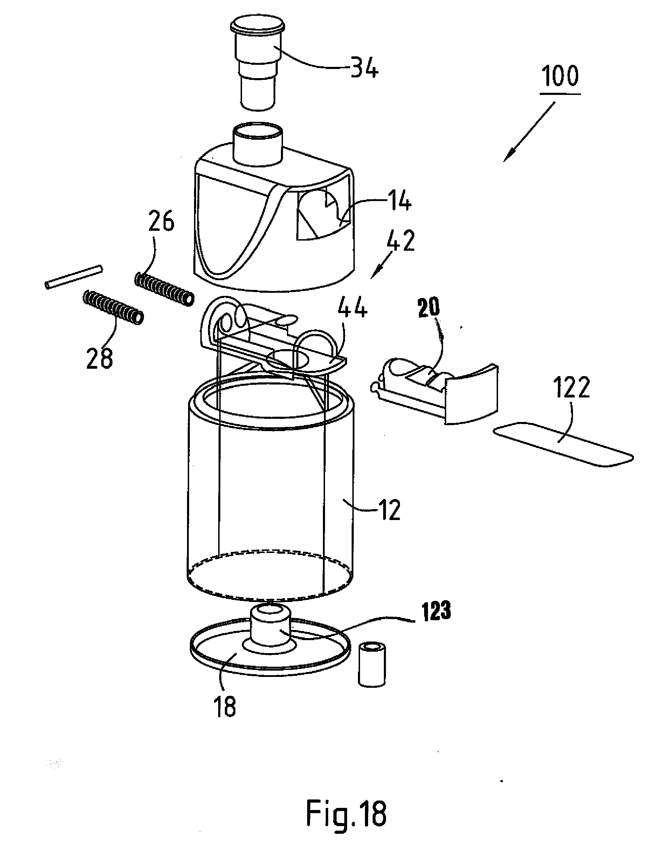

Den Fig. 18 bis 20 ist eine weitere Ausführungsform einer erfindungsgemäßen Dosiervorrichtung 100 zu entnehmen, die in Bezug auf die Anordnung des Schiebers sowie des das abzugebende fluide Medium enthaltenden Gehäuses sowie der Abdeckung dem der Fig. 1 bis 17 entspricht, so dass entsprechend für gleiche Elemente gleiche Bezugszeichen benutzt werden. Insoweit wird auch auf die Erläuterungen zu den Fig. 1 bis 17 verwiesen.

Abweichend von dem zuvor erläuterten Ausführungsbeispiel und ergänzend zu diesem weist die Vorrichtung 100 eine Schwingeinrichtung 102 auf, die vorzugsweise als Unwuchtmotor ausgebildet ist. Die Schwingeinrichtung 102, die nachstehend vereinfacht als Unwuchtmotor bezeichnet wird, wird dann aktiviert, wenn Medium abgegeben werden soll. Durch den Unwuchtmotor wird dabei sichergestellt, dass das fließfähige Material im erforderlichen Umfang über die erste Austrittsöffnung 40 in die Aufnahme 80, also die Dosierkammer in dem Schieber 20 fließen kann, um nach Ausrichten der Aufnahme 20 auf die zweite Austrittsöffnung abgegeben zu werden. Somit stellt der Unwuchtmotor 102 sicher, dass gleichmäßig Medium aus dem Gehäuse 12 abgegeben wird. Gleichzeitig ist sichergestellt, dass in dem Gehäuse 12 keine Material- bzw. Pulverreste verbleiben, so dass eine optimale Nutzung erfolgen kann.

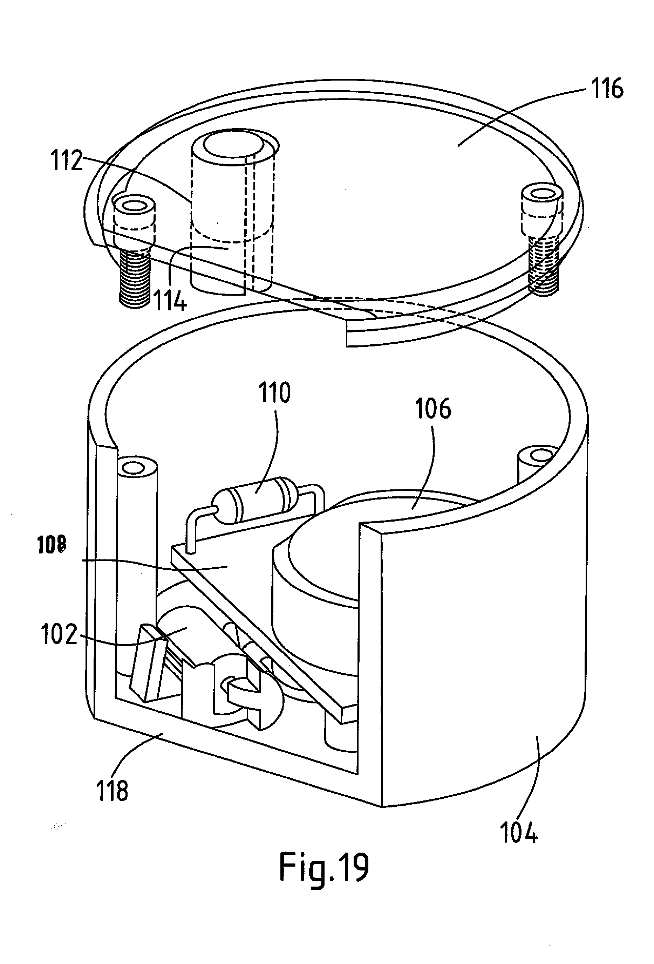

Gemäß dem Ausführungsbeispiel der Fig. 19 bis 20 befindet sich der Unwuchtmotor 102 in einem mit dem Gehäuse 12 vorzugsweise verschraubbaren Gehäuseabschnitt 104, der quasi mit dem Boden 18 des Gehäuses 12 einen Doppelboden bildet. In dem Gehäuseabschnitt 104 ist eine Platine 108 zur elektrischen Verschaltung des Unwuchtmotors 112 angeordnet. In der zeichnerischen Darstellung erkannt man eine Batterie wie Knopfbatterie 106, die mit dem Unwuchtmotor 102, also über die Platine 108 verschaltet ist. Zum Öffnen bzw. Schließen des Stromkreises ist ein Reedkontakt 110 vorgesehen, der über einen Magneten 112 geschaltet wird, der in einer Aufnahme 114 und in Längsrichtung des Gehäuses 12 verschiebbar angeordnet ist.

Die Aufnahme 114 geht dabei von der Bodenwandung 116 des Gehäuseabschnittes 104 aus, so dass dann, wenn die Vorrichtung 100 abgestellt ist bzw. in einer Stellung gehalten wird, in der sich die Abdeckung 14 oben befindet, sich der Magnet 112 in einem Umfang von dem Reedkontakt 110 beabstandet, dass dieser nicht schließt mit der Folge, dass der Stromkreis für den Unwuchtmotor 102 unterbrochen ist. Wird die Vorrichtung 110 gedreht, um also fließfähiges Medium abzugeben, so bewegt sich der Magnet 112 in der eine Führung bildenden Aufnahme 114 in Richtung des Reedkontaktes 110, so dass dieser geschlossen und somit der Unwuchtmotor 102 aktiviert wird. Durch die von dem Unwuchtmotor 102 erzeugte Schwingung wird das in dem Gehäuse 12 vorhandene fließfähige bzw. pulvrige Material in Richtung der ersten Austrittsöffnung 40 gefördert, um somit die Aufnahme 80 in dem Schieber 20 reproduzierbar befüllen zu können.

Der Gehäuseabschnitt 104 weist in seiner der Bodenwandung 116 gegenüberliegenden Begrenzungswandung 118 ein ein Gewinde aufweisendes Metalleinlegeteil 120 auf, das in eine Gewindebuchse 123 einschraubbar ist, das von der Bodenwandung 18 des Gehäuses 12 ausgeht bzw. diese durchsetzt.

Aus der Fig. 18 ergibt sich des Weiteren, dass das Basiselement 44 der Führung 42 für den Schieber 20 mit einer Folie 122 abgedeckt sein kann, die vor der Erstbenutzung der Vorrichtung 10 bzw. 100 entfernt wird. Hierdurch wird das Innere des Gehäuses 12, also der Vorratsbehälter bei Transport und Lagerung luftdicht verschlossen, so dass ein Schutz gegen eindringende Feuchtigkeit gegeben ist.

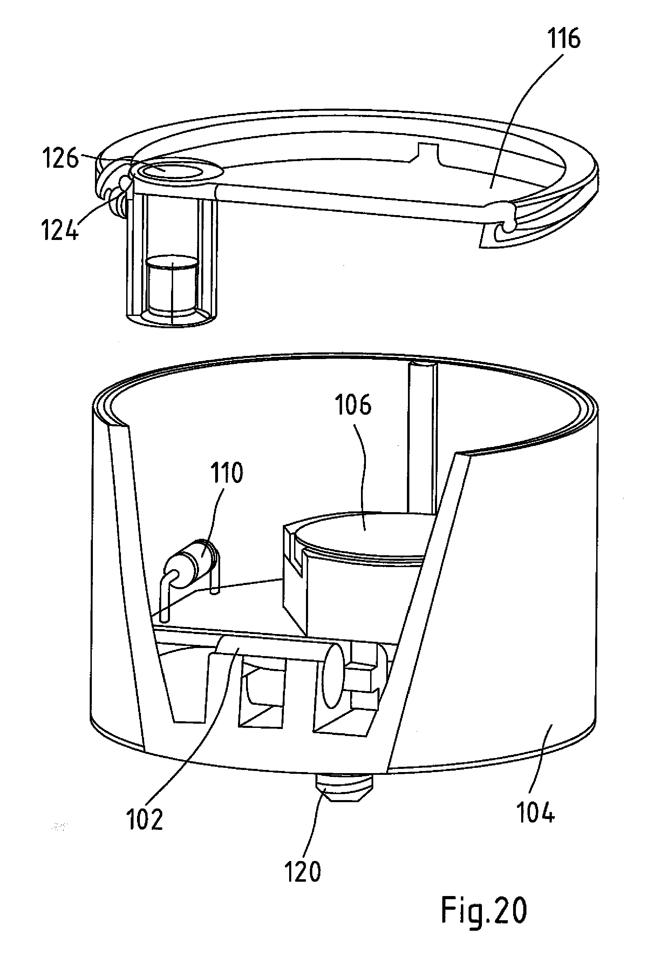

Wie sich aus der Fig. 20 ergibt, weist die aus Kunststoff bestehende Aufnahme 114 die Form eines Rohres auf, das von der Innenseite der Bodenwandung 116 des zweiten Gehäuses 104 ausgeht. Außenseitig und in Verlängerung der Aufnahme 114 befindet sich in der Bodenwandung 116 eine Aufnahme wie Vertiefung 124, in die ein Metallteil wie Stahlplättchen bzw. Unterlegescheibe 126 einsetzbar und festklemmbar ist, wodurch der Magnet 112 in einer Stellung gehalten wird, die im Bereich der Bodenwandung 116 verläuft, also in dem Teil des Rohres bzw. der Aufnahme 114, die von der Innenseite der Bodenwandung 116 ausgeht. Hierdurch weist der Magnet 112 einen hinreichenden Abstand von dem Reedkontakt 110 auf, so dass dieser nicht geschaltet und der den Unwuchtmotor 112 einschließende Stromkreis nicht geschlossen wird. Somit ist eine einfache Transportsicherung gegeben. Soll die Dosiervorrichtung 10 in Betrieb genommen werden, ist es nur erforderlich, dass das Metallteil 126 aus der in der Bodenwandung 116 vorhandenen Aufnahme 124 entfernt wird, so dass der Magnet 112 schwerkraftbedingt innerhalb der Aufnahme 114 bewegbar ist. Folglich wird der Reedkontakt 110 geschaltet und somit der den Unwuchtmotor 102 enthaltende Stromkreis geschlossen, wenn die Dosiervorrichtung 10 derart gedreht ist, dass dessen Kopf, also die zweite Austrittsöffnung 50 nach unten zeigt. Durch das Einschalten des Unwuchtmotors 102 wird folglich das in dem Gehäuse 12 vorhandene pulverförmige Medium in Schwingung mit der Folge gesetzt, dass eine Fließfähigkeit gegeben ist, damit das Pulvermaterial im erforderlichen Umfang in die als Dosierkammer zu bezeichnende Aufnahme 80 des Schiebers 20 fließen kann.

### Bezugszeichenliste

- 10: Dosiervorrichtung
- 12: Gehäuse
- 14: Abdeckung/Haube
- 16: Hauptkörper
- 18: Bodenwandung
- 20: Schieber
- 22: erste Öffnung
- 24: Frontwandung
- 26: Zugfedem
- 28: Zugfedem
- 30: abgeflachter Bereich
- 32: Vorsprung
- 34: Sicherung
- 35: Deckelelement
- 36: Begrenzungsfläche
- 37: Begrenzungsfläche
- 38: Kopfabschnitt
- 40: erste Austrittsöffnung
- 42: Führung
- 44: Basisabschnitt
- 46: Element
- 48: dritte Austrittsöffnung
- 50: zweite Austrittsöffnung
- 52: Längsschlitz
- 54: Längsschlitz
- 56: Achse
- 58: Vorsprung
- 60: Vorsprung
- 62: Basiskörper
- 64: Basisplatte
- 66: Längsseitenwandabschnitt
- 68: Längsseitenwandabschnitt
- 70: Begenzungswandung
- 72: Begenzungswandung
- 74: Begenzungswandung
- 76: Begenzungswandung
- 80: Aufnahme
- 82: Öffnung
- 84: Öffnung

- 100: Vorrichtung
- 102: Schwingeinrichtung
- 104: Gehäuseabschnitt
- 106: Knopfbatterie
- 108: Platine
- 110: Reedkontakt
- 112: Magnet
- 114: Aufnahme
- 116: Bodenwandung
- 118: Begrenzungswandung
- 120: Metalleinlegeteil
- 122: Folie
- 123: Gewindebuchse
- 124: Aufnahme
- 126: Metallplättchen

## Patentansprüche

1. Vorrichtung (10) zur dosierten Abgabe eines pulverförmigen Mediums, insbesondere Keramikpulver für dentale Zwecke, umfassend ein einen Vorratsbehälter für das Medium zur Verfügung stellendes Gehäuse (12) mit einer ersten Austrittöffnung (40), eine von dem Gehäuse ausgehende bzw. mit diesem verbundene Abdeckung (14) mit einer das Medium abgebenden zweiten Austrittsöffnung (50) sowie einen innerhalb der Abdeckung verschiebbaren wahlweise auf die erste oder die zweite Austrittsöffnung ausrichtbaren Schieber (20) mit einer Aufnahme (80) für zu dosierende Menge des Mediums, wobei der Schieber mit zumindest einem Federelement (26, 28) wechselwirkt, über das der Schieber zum Ausrichten der Aufnahme auf die erste Austrittsöffnung fortwährend kraftbeaufschlagt ist,
**dadurch gekennzeichnet,**
**dass** der Schieber (20) in einer auf die zweite Austrittsöffnung (50) ausgerichteten Stellung mittels einer Sicherung (34) fixierbar ist.

2. Vorrichtung nach Anspruch 1,
**dadurch gekennzeichnet,**
**dass** die Umfangswandung der Abdeckung (14) eine Öffnung (22) als erste Öffnung aufweist, über die der Schieber (20) entgegen von dem zumindest einen Federelement (26, 28) erzeugter Kraft in die Abdeckung (14) zum Verstellen der Aufnahme (80) von ihrer Ausrichtung zu der ersten Austrittsöffnung (40) zum Ausrichten auf die zweite Austrittsöffnung (50) hineinschiebbar ist.

3. Vorrichtung nach Anspruch 1,
**dadurch gekennzeichnet,**
**dass** die Abdeckung (14) kopfseitig abgeflacht ist und eine vorzugsweise senkrecht zur Längsachse des Gehäuses (12) verlaufende Kopffläche (30) aufweist, die von der zweiten Austrittsöffnung (50) durchsetzt ist, wobei vorzugsweise von der Kopffläche (30) ein hohlzylindrischer Vorsprung (32) abragt, der die zweite Austrittsöffnung (50) bildet oder umgibt und in den die Sicherung (34) entfernbar einsetzbar ist.

4. Vorrichtung nach zumindest Anspruch 1,
**dadurch gekennzeichnet,**
**dass** das Gehäuse (12) eine Schwingeinrichtung (102) enthält oder mit dieser verbunden ist, die in Abhängigkeit von der Lage des Gehäuses aktivierbar ist.

5. Vorrichtung nach zumindest einem der vorhergehenden Ansprüche,
**dadurch gekennzeichnet,**
**dass** das Gehäuse (12) abdeckungsseitig einen kappen- wie kegel- bzw. kegelstumpfförmigen Fortsatz (38) aufweist, der die erste Austrittsöffnung (40) begrenzt, und dass von dem Fortsatz eine Führung (42) für den Schieber (20) ausgeht, die in der Abdeckung (14) und vorzugsweise senkrecht zur Längsachse des Gehäuses verläuft, wobei insbesondere die Führung (42) aus einem plattenförmigen schieberseitig eben verlaufenden Basiselement (44) und einem von diesem ausgehenden und dieses zumindest bereichsweise abdeckenden gebogenen Element (46) einer Innengeometrie besteht, die an Außengeometrie des Schiebers (20) angepasst ist.

6. Vorrichtung nach zumindest einem der vorhergehenden Ansprüche,
**dadurch gekennzeichnet,**
**dass** das Basiselement (44) eine in die erste Austrittsöffnung (40) übergehende Öffnung als zweite Öffnung aufweist und dass das gebogene Element (46) in Längsrichtung des Basiselements versetzt zu der zweiten Öffnung von einer Öffnung (48) als dritte Öffnung durchsetzt ist, die in die zweite Austrittsöffnung (50) übergeht.

7. Vorrichtung nach zumindest einem der vorhergehenden Ansprüche,
**dadurch gekennzeichnet,**
**dass** von einem Endbereich der Führung (42), insbesondere von dem im Schnitt eine Kreisabschnittgeometrie wie Halbkreis aufweisenden gebogenen Element (46) eine erste Befestigung für das zumindest eine Federelement (26, 28) ausgeht, wobei insbesondere die erste Befestigung durch von jeweiligem Längsrandbereich der Führung (42) ausgehende stiftförmige Vorsprünge (56, 58) gebildet ist, und dass vorzugsweise im zum ersten Endbereich gegenüberliegenden zweiten Endbereich der Führung (42) und in dessen Längsrichtung verlaufend zumindest ein Schlitz (52, 54) verläuft, der von einer von dem Schieber (20) ausgehenden zweiten Befestigung für das zumindest eine Federelement (26, 28) durchsetzt ist, wobei insbesondere die zweite Befestigung (56) ein mit dem Schieber (20) lösbar verbundenes stiftförmiges Element wie eine Achse (56) ist.

8. Vorrichtung nach zumindest einem der vorhergehenden Ansprüche,
**dadurch gekennzeichnet,**
**dass** in jeweiligem Längsrandbereich des gebogenen Elements (46) ein Schlitz (52, 54) verläuft, der von dem von dem Schieber (20) ausgehenden stiftförmigen Element wie der Achse (56) durchsetzt ist, wobei insbesondere entlang jeden Längsrandbereichs der Führung (42) ein Federelement (26, 28) wie Zugfeder verläuft, das zwischen der ersten und zweiten Befestigung (56, 58, 60) fixiert ist.

9. Vorrichtung nach zumindest einem der vorhergehenden Ansprüche,
**dadurch gekennzeichnet,**
**dass** der Schieber (20) umfangsseitig eine Halbzylindergeometrie aufweist, dessen eine Bodenwandung (64) bildende Flachseite auf dem Basiselement (44) der Führung (42) aufliegt, wobei insbesondere von der Bodenwandung (64) und vorzugsweise sich senkrecht zu dieser erstreckende Längsränder (46, 48) ausgehen, zwischen denen sich stegförmige Zwischenwandungen (72, 74) erstrecken, und wobei von der Bodenwandung (64) die Aufnahme (80) begrenzende Wandungen (70, 78) ausgehen, die die Aufnahme (80) begrenzen und in ihrem freien Umfang an Innenumfangsgeometrie des gebogenen Elementes (46) der Führung (42) angepasst sind.

10. Vorrichtung nach zumindest einem der vorhergehenden Ansprüche,
**dadurch gekennzeichnet,**
**dass** die Aufnahme (80) bodenseitig eine Öffnung (82) als vierte Öffnung aufweist, die in Abhängigkeit von der Stellung des Schiebers (20) auf die erste Austrittsöffnung ausrichtbar oder durch das Basiselement (44) der Führung (42) abgedeckt ist.

11. Vorrichtung nach zumindest einem der vorhergehenden Ansprüche,
**dadurch gekennzeichnet,**
**dass** der Schieber (20) in seinem der ersten Öffnung (22) zugewandten Bereich eine außenseitig vorzugsweise strukturierte Begrenzungswandung (24) aufweist, auf die von außerhalb der Vorrichtung (10) einwirkende Kraft übertragbar ist, wobei insbesondere die Begrenzungswandung (24) zum Verschieben des Schiebers (20) bei in Ausgriff mit der Sicherung (34) sich befindendem Schieber die erste Öffnung (22) durchsetzt und außerhalb der Abdeckung (14) verläuft.

12. Vorrichtung nach zumindest einem der vorhergehenden Ansprüche,
**dadurch gekennzeichnet,**
**dass** von der Bodenwandung (64) des Schiebers (20) mehrere Zwischenwandungen wie Versteifungsrippen (72, 74) ausgehen, die umfangsseitig zumindest abschnittsweise der Umfangsgeometrie des gebogenen Elemente (46) angepasst sind.

13. Vorrichtung nach zumindest einem der vorhergehenden Ansprüche,
**dadurch gekennzeichnet,**
**dass** die Sicherung (34) eine Zylindergeometrie aufweist, wobei insbesondere dass die Sicherung (34) Abschnitte mit voneinander abweichenden Durchmessern aufweist und/oder die Sicherung (34) endseitig ein flanschartig ausgebildetes Deckelelement (35) aufweist, das umfangsseitig fluchtend in Umfangsfläche des hohlzylindrischen Vorsprungs (32) übergeht oder über diese seitlich vorsteht.

14. Vorrichtung nach zumindest einem der vorhergehenden Ansprüche,
**dadurch gekennzeichnet,**
**dass** Bodenwandung (18) des Gehäuses (12) mit dessen Umfangswandung stoffschlüssig, insbesondere durch Ultraschallsschweißen verbunden ist, und/oder dass die Abdeckung (14) mit dem Gehäuse (12) stoffschlüssig, insbesondere mittels Ultraschallschweißens, verbunden ist und/oder dass das Gehäuse (12) und/oder die Haube (12) ein aus Kunststoff bestehendes Spritzgussteil ist.

15. Vorrichtung (10) zur dosierten Abgabe eines pulverförmigen fließfähigen Mediums, insbesondere Keramikpulver für dentale Zwecke, umfassend ein einen Vorratsbehälter für das Medium zur Verfügung stellendes Gehäuse (12) mit einer ersten Austrittsöffnung (40), eine von dem Gehäuse ausgehende bzw. mit diesem verbundene Abdeckung (14) mit einer das Medium abgebenden zweiten Austrittsöffnung (50) sowie einen innerhalb der Abdeckung verschiebbaren wahlweise auf die erste oder die zweite Austrittsöffnung ausrichtbaren Schieber (20) mit einer Aufnahme (80) für zu dosierende Menge des Mediums, wobei der Schieber mit zumindest einem Federelement (26, 28) wechselwirkt, über das der Schieber zum Ausrichten der Aufnahme auf die erste Austrittsöffnung fortwährend kraftbeaufschlagt ist,
**dadurch gekennzeichnet,**
**dass** das Gehäuse (12) eine Schwingeinrichtung (102) enthält oder mit dieser verbunden ist, die in Abhängigkeit von der Lage des Gehäuses aktivierbar ist.

16. Vorrichtung nach zumindest einem der vorhergehenden Ansprüche,
**dadurch gekennzeichnet,**
**dass** die Schwingeinrichtung in einem Doppelboden des Gehäuses (12) oder in einem mit dem Gehäuse als dem ersten Gehäuse verbundenen zweiten Gehäuse (104) angeordnet ist, wobei vorzugsweise das zweite Gehäuse (104) mit der Bodenwandung (18) des ersten Gehäuses (12) verschraubbar ist.

17. Vorrichtung nach zumindest einem der vorhergehenden Ansprüche,
**dadurch gekennzeichnet,**
**dass** die Schwingeinrichtung (102) ein Unwuchtmotor ist, der über einen in Abhängigkeit von der Lage des Gehäuses (12) betätigbaren Schalter (110) wie Reedkontakt mit einer Spannungsquelle (106) wie Batterie verbunden oder von dieser getrennt ist.

18. Vorrichtung nach zumindest einem der vorhergehenden Ansprüche,
**dadurch gekennzeichnet,**
**dass** dem Reedkontakt (110) ein in Längsrichtung des Gehäuses (12) verschiebbarer Magnet (112) zugeordnet ist, wobei insbesondere der Magnet (112) eine Zylinderform aufweist und in einer sich in Längsrichtung des ersten bzw. zweiten Gehäuses (12, 104) erstreckenden hohlzylindrischen Aufnahme (114) verschiebbar ist, deren innere Längenerstreckung größer als Erstreckung des Magneten in Längsrichtung des Gehäuses ist.

19. Vorrichtung nach zumindest einem der vorhergehenden Ansprüche,
**dadurch gekennzeichnet,**
**dass** die Aufnahme (114) für den Magneten (112) von Bodenwandung (116) des zweiten Gehäuses (104) ausgeht oder an dieser angrenzt und dass außenseitig in oder an der Bodenwandung ein den Magneten (112) in seiner bodenwandseitig verlaufenden Stellung haltendes fixierbares Metallteil (126) entfernbar angeordnet ist.
